# EUROPEAN PATENT APPLICATION

(11) **EP 4 335 904 A1**
(43) Date of publication of application: **13.03.2024**
(21) Application number: 22798965.4
(22) Date of filing: 06.05.2022
(51) Int. Cl.: C08L 101/00, C08L 67/00, C08L 101/16

(54) **BIODEGRADABLE RESIN COMPOSITION**

(30) Priority: 06.05.2021 JP 2021078335
(71) Applicant: Nisshinbo Chemical Inc., Tokyo 103-8650 (JP); National University Corporation Gunma University, Maebashi-shi, Gunma 371-8510 (JP)
(72) Inventor: SASAKI, Takahiro, Chiba-shi Chiba 267-0056 (JP); KOTANI, Saori, Chiba-shi Chiba 267-0056 (JP); TANIGUCHI, Akira, Chiba-shi Chiba 267-0056 (JP); FUKASE, Atsuko, Chiba-shi Chiba 267-0056 (JP); KASUYA, Ken-ichi, Maebashi-shi, Gunma 371-8510 (JP); TACHIBANA, Yuya, Maebashi-shi, Gunma 371-8510 (JP); OHTA, Yukari, Maebashi-shi, Gunma 371-8510 (JP)
(74) Representative: Gill Jennings & Every LLP
(86) International application number: PCT/JP2022/019590
(87) International publication number: WO 2022/234861

(57) **Abstract**

To provide a biodegradable resin composition usable for producing a molded article having high biodegradability particularly in the ocean, and the like. Particularly, provided is a biodegradable resin composition containing a biodegradable resin: and one or more components selected from the group consisting of agarose, sodium alginate, casein, and keratin, in which the content of the biodegradable resin is 50% by weight or more.

## Description

### Technical Field

The present invention relates to a biodegradable resin composition, and relates to a biodegradable resin composition having high biodegradability particularly in the ocean, and the like.

### Background Art

Biodegradable resins are different in the biodegradation rate, and the biodegradability is very slow in environments where there are few microorganisms, e.g., in the ocean, in some cases.

Known methods for enhancing the biodegradability of the biodegradable resin in the ocean include a method for mixing a compound dissolving in seawater with the biodegradable resin and a method for compounding degrading bacteria for the biodegradable resin in the biodegradable resin.

For example, Patent Document 1 discloses a molded article of a biodegradable resin having biodegradability enhanced by compounding of heavy calcium carbonate in the biodegradable resin and dissolution of the calcium carbonate into the ocean, increasing the specific surface area of the remaining resin.

Further, Patent Document 2 discloses such a biodegradable film material that, when the biodegradable film material kneaded or coated with organic degrading bacteria contacts soil or water, the organic degrading bacteria are released, starting the biodegradation of the resin in the film.

### Citation List

### Patent Document

Patent Document 1: JP 2020-066721 A
Patent Document 2: JP 2018-083946 A

### Summary of Invention

### Technical Problem

Means described in Patent Document 1 has difficulty in the progress of the biodegradation due to a problem with a reduction in the physical properties of a molded article caused by dissolution of a compound quickly dissolving in seawater when the molded article is used in seawater or the difficulty of the accumulation of microorganisms in a molded article itself in the ocean, even when the specific surface area increases. The method described in Patent Document 2 has a low effect of promoting the biodegradation because the degrading bacteria are released into the ocean and do not remain in the film in an ocean environment.

Therefore, it is an object of the present invention to provide a biodegradable resin composition capable of producing a molded article having high biodegradability in the ocean, and the like.

### Solution to Problem

As a result of extensive research to solve the above-described problem, the present inventors have found that the above-described problem can be solved by mixing a biodegradable resin with a specific component, and thus have accomplished the present invention.

The present invention is as follows.
[1] A biodegradable resin composition containing:
   a biodegradable resin; and
   one or more components selected from the group consisting of agarose, sodium alginate, casein, and keratin, in which
   the content of the biodegradable resin is 50% by weight or more.
[2] The biodegradable resin composition according to [1], in which the biodegradable resin is polylactic acid or polybutylene succinate adipate.
[3] The biodegradable resin composition according to [1] or [2], in which the component is agarose or casein.
[4] A molded article, which is obtainable by curing of the biodegradable resin composition according to any one of [1] to [3].
[5] The molded article according to [4], which is for use in a product contacting seawater.
[6] Use of the molded article according to [5] in a product contacting seawater.
[7] A method for producing a biodegradable resin composition including: mixing one or more components selected from the group consisting of agarose, sodium alginate, casein, and keratin with a biodegradable resin, and setting the content of the biodegradable resin to 50% by weight or more.
[8] Use of one or more components selected from the group consisting of agarose, sodium alginate, casein, and keratin for preparation of a biodegradable resin composition containing 50 wt. or more of a biodegradable resin.
[9] The use according to [8], in which the biodegradable resin is polylactic acid or polybutylene succinate adipate.
[10] A method for enhancing marine biodegradability of a cured product of a resin composition obtained by mixing one or more components selected from the group consisting of agarose, sodium alginate, casein, and keratin with a biodegradable resin.
[11] The method according to [10], in which the biodegradable resin is polylactic acid or polybutylene succinate adipate.

### Advantageous Effects of the Invention

The present invention can provide a biodegradable resin composition usable for producing a molded article having high biodegradability particularly in the ocean, and the like.

### Description of Embodiments

Hereinafter, the present invention is described based on a specific embodiment. In this description, "high biodegradability in the ocean" means that the biodegradability is excellent in the ocean or in a contact state with seawater for a certain period of time or longer.

### <Biodegradable resin>

A biodegradable resin contained in a biodegradable resin composition of the present disclosure is not particularly limited insofar as it is resin known as the biodegradable resin.

For example, one or more selected from the group consisting of polylactic acid, polybutylene succinate adipate, polybutylene succinate, polyethylene terephthalate succinate, polybutylene adipate, polybutylene terephthalate adipate, polyglycolic acid, and polyvinyl alcohol can be mentioned.

Polylactic acid is not particularly limited, and homopolymers of L-lactic acid or D-lactic acid, copolymers of L-lactic acid and D-lactic acid, or a mixture of the homopolymers and/or the copolymers may be acceptable. Polylactic acid different from the crystallinity obtained according to the enantiomeric ratio of lactic acid, a method for copolymerizing enantiomers (random, block, graft, and the like), a method for adding a crystal nucleating agent, and the like can also be selected as appropriate.

Polylactic acid is known as the biodegradable resin, which is mainly due to microorganism degradation in soil, and is known to have poor biodegradability in environments with a low density of microorganisms, such as the ocean.

Polybutylene succinate is not particularly limited, and those synthesized by dehydration polycondensation using succinic acid (HOCOCH₂CH₂COOH) and 1,4-butanediol (HO(CH₂)₄OH) as raw materials or commercial products are also usable.

Polybutylene succinate adipate is aliphatic polyester obtained by copolymerizing polybutylene succinate with adipic acid. As polybutylene succinate adipate, those obtained by the above-described synthesis or commercial products are usable.

Polyethylene terephthalate succinate, polybutylene adipate, polybutylene terephthalate adipate, polyglycolic acid, and polyvinyl alcohol may be produced according to known production methods or commercial products may be used.

Among the biodegradable resins above, polylactic acid and polybutylene succinate adipate can be mentioned as those having a particularly large effect in the present disclosure, and polylactic acid can be mentioned as those having the largest effect.

As described above, polylactic acid is known to have high biodegradability in soil, but is known to have low biodegradability in environments where polylactic acid contacts seawater, such as ocean. In contrast thereto, the biodegradable resin composition of the present disclosure contains a component promoting marine degradability described later, and thus can provide a molded article exhibiting good biodegradability even in an environment where the molded article contacts seawater, such as the ocean.

The content of the biodegradable resin contained in the biodegradable resin composition of the present disclosure is 50% by weight or more to ensure appropriate strength of the molded article of the biodegradable resin composition. When the content is less than 50% by weight, sufficient strength of the molded article cannot be obtained. In the biodegradable resin composition of the present disclosure, even when the content of the biodegradable resin, which has been considered to exhibit poor biodegradability in the ocean, is as high as 50% by weight or more, sufficient biodegradability of the molded article in the ocean is ensured because the component promoting marine degradability described later is contained. In the biodegradable resin composition, when the content of the component promoting marine degradability described later is excessively large, the biodegradation of the component quickly progresses, and the biodegradation of the biodegradable resin does not successfully progress. The content of the biodegradable resin is more preferably 70% by weight or more and still more preferably 80% by weight or more. On the other hand, the upper limit is preferably 97% by weight or less, more preferably 95% by weight or less, and still more preferably 93% by weight or less in view of the balance with the content of the component promoting marine degradability described later.

Among the biodegradable resins, polylactic acid has a high processing temperature, and therefore the content in the biodegradable resin composition is preferably 70% by weight or more and 97% by weight or less to prevent the deterioration of the component promoting marine biodegradability described later. Polybutylene succinate has a processing temperature lower than that of polylactic acid, and therefore the content in the biodegradable resin composition is preferably 50% by weight or more and 97% by weight or less.

### <Component promoting marine degradability>

The biodegradable resin composition of the present disclosure contains one or more selected from the group consisting of agarose, sodium alginate, casein, and keratin as a component different from the biodegradable resin.

Since the above-described component is contained, the biodegradable resin composition of the present disclosure exhibits good biodegradability even in an environment where the biodegradable resin composition contacts seawater, such as the ocean, with respect to a molded article of the biodegradable resin composition containing the biodegradable resin, only the biodegradability in soil of which has been mainly focused hitherto.

With respect to the reason for the above, the present inventors have estimated that the above-described component is contained in the resin composition and the molded article thereof, which facilitates the aggregation of microorganisms contained in seawater on the surface of the molded article, efficiently causing the assimilation of the above-described component and the biodegradable resin due to microorganisms.

Agarose can also be obtained by removing agaropectin having sulfate ester for purification, or commercial products are also usable. Agarose is preferable due to good dispersibility in the biodegradable resin and excellent appearance and strength of products.

Sodium alginate may be obtained by applying acid-treatment to seaweed as a raw material for softening, and then heating the same in the presence of alkali (sodium), followed by separation and purification, or commercial products are also usable.

Casein is a main component of milk proteins contained in milk, and commercial products are usable. Casein is preferable because casein is a highly nutritious protein, and therefore is favored by microorganisms in seawater, and thus has a high effect of promoting the biodegradability.

Keratin is a major fibrous structural protein present in hair, skin, and nails, and commercial products are usable.

The above-described components may be used singly or in combination of two or more kinds thereof. Among the above-described components, agarose or casein can be preferably mentioned as an example.

The content of each component above in the biodegradable resin composition of the present disclosure is preferably 3% by weight or more, more preferably 5% by weight or more, and still more preferably 7% by weight or more from the viewpoint of enhancing aggregation properties of microorganisms with respect to the molded article of the biodegradable resin composition in an environment where the biodegradable resin composition contacts seawater, such as ocean, and enhancing the biodegradability of the molded article. On the other hand, the upper limit of the content is preferably 45% by weight or less, more preferably 30% by weight or less, and still more preferably 10% by weight or less in view of the balance with the content of the biodegradable resin described above. Agarose has solubility in hot water, and therefore the content in the biodegradable resin composition is preferably 3% by weight or more and 30% by weight or less. Casein, when added to polyester, causes a decrease in the molecular weight or makes the resin more hygroscopic due to its high hygroscopicity, and therefore the content in the biodegradable resin composition is preferably 3% by weight or more and 30% by weight or less.

With respect to the weight ratio between the biodegradable resin and the one or more components selected from the group consisting of agarose, sodium alginate, casein, and keratin in the biodegradable resin composition of the present disclosure, 0.5 to 40 can be mentioned when the biodegradable resin was set to 100, and the weight ratio is preferably 1 to 30 and more preferably 3 to 10.

### <Other additional components>

The biodegradable resin composition of the present disclosure may further contain other components insofar as the functions are not impaired. As the other components, pigments, fillers, leveling agents, surfactants, dispersants, UV absorbers, flame retardants, antioxidants, plasticizers, colorants, cross-linking agents, and the like can be mentioned.

### <Method for producing biodegradable resin composition>

A method for producing a biodegradable resin composition of the present disclosure is not particularly limited, and known methods are usable. For example, a method is mentioned which includes melting and kneading a mixture of the components at a predetermined temperature, e.g., a temperature of about 150 to 200°C, using various uniaxial or multiaxial extruders. The components may be kneaded at once or an arbitrary component may be kneaded, and then the remaining components may be added and kneaded.

### <Molded article>

The molded article can be produced using the biodegradable resin composition of the present disclosure. A method for producing the molded article is not limited, and the molded article can be produced by heating the biodegradable resin composition prepared by the above-described method to a temperature equal to or higher than the softening point, and molding the same into desired shape and size, followed by cooling.

The intended use of the molded article above is not particularly limited, and general-purpose products, such as films, sheets, trays, or garbage bags, can be mentioned, for example. These general-purpose products include those that may be disposed in the ocean after use, even when the products do not contact seawater during use. With respect to the film, the thickness of 1 µm or more and 100 µm or less can be mentioned. With respect to the sheet, a thickness of 100 µm or more and 2000 µm or less can be mentioned. With respect to the garbage bags, the thickness of 1 µm or more and 20 µm or less can be mentioned. Further, as the intended use of the molded article above, products contacting seawater can also be mentioned. As the products contacting seawater, products used in the fishing industry, such as fishing gear including fishing lines and nets, can be mentioned. When the molded article obtained using the biodegradable resin composition of the present disclosure is used for the products contacting seawater, the molded article does not immediately degrade in use. On the other hand, when the molded article is lost in the ocean due to unforeseen circumstances, the molded article degrades in the ocean due to the good marine biodegradability thereof, making it difficult to cause the remaining of the molded article in the ocean, which has been problematic in recent years.

With respect to the degradation rate in the ocean of the molded article obtained using the biodegradable resin composition of the present disclosure, an aspect is mentioned in which, when the molded article is immersed in seawater kept at 25°C for three months under light-shielded conditions, for example, the degradation rate when polylactic acid is used decreases by 4% by weight or more and the degradation rate when polybutylene succinate adipate is used decreases by 30% by weight or more, with the original weight of a 50 µm film as a reference.

More specifically, an aspect is mentioned in which the degradation rate in a molded article of a resin composition in which polylactic acid is used as the biodegradable resin, agarose is added thereto decreases by 25% by weight or more, and the degradation rate when casein is used decreases by 29% by weight or more.

The degradation rate in a molded article of a resin composition in which polybutylene succinate adipate is used as the biodegradable resin, agarose is added thereto decreases by 31% by weight or more, and the degradation rate when casein is used decreases by 90% by weight or more.

For the reasons above, the molded article of the biodegradable resin composition of the present disclosure is suitable for the use of products that may accidentally flow into the ocean (e.g., general-purpose products described above) or products that are intentionally brought into contact with seawater (e.g., products used in the fishing industry described above).

Further, it is found based on the description above that, according to the present disclosure, the aspect is preferable in which the one or more components selected from the group consisting of agarose, sodium alginate, casein, and keratin is used in the preparation of the biodegradable resin composition containing the biodegradable resin.

The use of the above-described predetermined component in the preparation of the biodegradable resin composition can provide the resin composition to obtain a molded article having high marine biodegradability.

With respect to the type and the addition amount to the resin composition of the biodegradable resin composition and the addition amount of the one or more selected from the group consisting of agarose, sodium alginate, casein, and keratin to the resin composition, the same conditions as those of the content as described in the section of "Biodegradable resin composition" above are applicable. Among these conditions, the use of polylactic acid or polybutylene succinate adipate as the biodegradable resin is preferable.

Further, the present disclosure also includes a method for enhancing the marine biodegradability of a cured product of the resin composition obtained by mixing the one or more components selected from the group consisting of agarose, sodium alginate, casein, and keratin with the biodegradable resin.

As described above, the addition of the one or more components selected from the group consisting of agarose, sodium alginate, casein, and keratin to the resin composition containing the biodegradable resin, the marine biodegradability of which has been recognized not to be very high, can clearly enhance the marine biodegradability of the molded article of the resin composition.

With respect to the type and the addition amount to the resin composition of the biodegradable resin composition and the addition amount of the one or more selected from the group consisting of agarose, sodium alginate, casein, and keratin to the resin composition, the same conditions as those of the content as described in the section of "Biodegradable resin composition" above are applicable. Among these conditions, the use of polylactic acid or polybutylene succinate adipate as the biodegradable resin is preferable.

With respect to a method for molding the resin composition obtained using the above-described method and the intended use of the molded article, the contents described in the section of <Molded article> above are applicable.

### EXAMPLES

Hereinafter, the present invention is specifically described with reference to Examples. However, the present invention is not limited to the aspects of the following Examples.

### <Example 1> Kneading of polylactic acid (PLA) and agarose

A resin composition was obtained by kneading 90 parts by mass of polylactic acid (Ingeopolymer 2003D: NatureWorks) and 10 parts by mass of agarose (product code A9639, Sigma-Aldrich Inc.) using a lab mixer for six minutes under the condition of 180°C.

### <Examples 2 to 4>

Resin compositions were obtained in the same manner, except that agarose in Example 1 was changed to sodium alginate (Kimika Algin: Kimika Corporation), casein (Kanto Kagaku Co., Ltd.), and keratin (reagent: Tokyo Kasei Kogyo Co., Ltd.), respectively.

### <Example 5> Kneading of polybutylene succinate adipate (PBSA) and agarose

A resin composition was obtained by kneading 90 parts by mass of polybutylene succinate adipate (FD92PM: Mitsubishi Chemical Corporation) and 10 parts by mass of agarose (reagent: Sigma-Aldrich Inc.) using a lab mixer for six minutes under the condition of 140°C.

### <Examples 6 to 8>

Resin compositions were obtained in the same manner, except that agarose in Example 5 was changed to sodium alginate (Kimika Algin: Kimika Corporation), casein (reagent: Kanto Kagaku Co., Ltd.), and keratin (reagent: Tokyo Kasei Kogyo), respectively.

### <Comparative Examples 1 and 2>

Resin compositions were obtained by kneading 100 parts by weight of polylactic acid (Ingeopolymer 2003D: NatureWorks) and polybutylene succinate adipate (FD92PM: Mitsubishi Chemical Corporation) using a lab mixer for six minutes under the conditions of 180°C and 140°C, respectively.

### <Comparative Example 3> Kneading of polylactic acid and cellulose

A resin composition was obtained by kneading 90 parts by mass of polylactic acid (Ingeopolymer 2003D: NatureWorks) and 10 parts by mass of cellulose (reagent: Fuji Film Wako Pure Chemical Co., Ltd) using a lab mixer for six minutes under the condition of 180°C.

### <Comparative Examples 4 and 5>

Resin compositions were obtained in the same manner, except that cellulose in Comparative Example 4 was changed to chitin (product code 034-13632, Fujifilm Wako Pure Chemical Co., Ltd) and calcium alginate (product code: A0738, Tokyo Chemical Industry Co., Ltd), respectively.

### <Comparative Example 6> Kneading of polybutylene succinate adipate and cellulose

A resin composition was obtained by kneading 90 parts by mass of polybutylene succinate adipate (FD92PM (product name), Mitsubishi Chemical Corporation Co., Ltd.) and 10 parts by mass cellulose (reagent: Fujifilm Wako Pure Chemical Industries, Ltd.) using a lab mixer for six minutes under the condition of 140°C.

### <Comparative Examples 7 and 8>

Resin compositions were obtained in the same manner, except that cellulose in Comparative Example 7 was changed to chitin (product code 034-13632, Fujifilm Wako Pure Chemical Co., Ltd) and calcium alginate (product code: A0738 Tokyo Chemical Industry Co., Ltd), respectively.

### <Marine biodegradability test>

The melted and kneaded resin composition was flat-pressed at a temperature equal to or higher than the softening point to produce a sheet having a thickness of about 300 µm, and a 20 mm square sheet was produced from the sheet. Each sheet was cleaned with ethanol, vacuum-dried, weighed, wrapped in wire mesh, and immersed in a water tank containing seawater. After three months had passed, the wire mesh was pulled up, and the sheet was cleaned and dried in the same manner as before the test, and then weighed to determine the weight loss rate. The rate ratio was calculated by setting the weight loss rate of a molded article (sheet) of the resin composition, in which the component promoting marine biodegradability was not added to each of the biodegradable resins to 1.0. Table 1 shows the results. The numerical values in the brackets in Table 1 indicate the weight loss amount (µg) per square centimeter, per day (unit: µg/cm²/day). Negative numerical numbers in the table indicate that the molded article did not degrade and, conversely, the weight increased.

**[Table 1]**

| | PLA | | PBSA |
|---|---|---|---|
| Ex. 1 | 210 (8.76) | Ex. 5 | 1.4 (11.0) |
| Ex. 2 | 229 (9.56) | Ex. 6 | 2.3 (17.9) |
| Ex. 3 | 240 (10.00) | Ex. 7 | 4.1 (31.2) |
| Ex. 4 | 39 (1.64) | Ex. 8 | 1.9 (14.6) |
| Comp. Ex. 1 | 1.0 (0.04) | Comp. Ex. 2 | 1.0 (7.7) |
| Comp. Ex. 3 | -1.7 (-0.07) | Comp. Ex. 6 | 0.9 (6.6) |
| Comp. Ex. 4 | -8.4 (-0.35) | Comp. Ex. 7 | 1.2 (8.9) |
| Comp. Ex. 5 | -35 (-1.48) | Comp. Ex. 8 | 1.2 (9.5) |

As is understood from the evaluation results shown in Table 1, it was found that the marine biodegradability is considerably enhanced by mixing the biodegradable resin with the specific component promoting the marine biodegradability.

This result suggests that, by the addition of the specific component promoting the marine biodegradability to the resin composition, a large amount of microorganisms in seawater are accumulated in the biodegradable resin in the molded article, enhancing the biodegradability.

### Industrial Applicability

The present invention can provide a biodegradable resin composition usable for producing the molded article having high biodegradability particularly in the ocean, and the like.

## Claims

1. A biodegradable resin composition comprising:
a biodegradable resin; and
one or more components selected from the group consisting of agarose, sodium alginate, casein, and keratin,
wherein a content of the biodegradable resin is 50% by weight or more.

2. The biodegradable resin composition according to claim 1, wherein the biodegradable resin is polylactic acid or polybutylene succinate adipate.

3. The biodegradable resin composition according to claim 1 or 2, wherein the component is agarose or casein.

4. A molded article, which is obtainable by curing of the biodegradable resin composition according to any one of claims 1 to 3.

5. The molded article according to claim 4, which is for use in a product contacting seawater.

6. Use of the molded article according to claim 5 in a product contacting seawater.

7. A method for producing a biodegradable resin composition comprising:
mixing one or more components selected from the group consisting of agarose, sodium alginate, casein, and keratin with a biodegradable resin; and
setting a content of the biodegradable resin to 50% by weight or more.

8. Use of one or more components selected from the group consisting of agarose, sodium alginate, casein, and keratin for preparation of a biodegradable resin composition containing 50 weight or more of a biodegradable resin.

9. The use according to claim 8, wherein the biodegradable resin is polylactic acid or polybutylene succinate adipate.

10. A method for enhancing marine biodegradability of a cured product of a resin composition obtained by mixing one or more components selected from the group consisting of agarose, sodium alginate, casein, and keratin with a biodegradable resin.

11. The method according to claim 10, wherein the biodegradable resin is polylactic acid or polybutylene succinate adipate.
